# EUROPEAN PATENT APPLICATION

(11) **EP 2 709 420 A1**
(43) Date of publication of application: **19.03.2014**
(21) Application number: 13184289.0
(22) Date of filing: 13.09.2013
(51) Int. Cl.: H04W 88/16

(54) **Mobile router**

(30) Priority: 17.09.2012 KR 20120103009
(71) Applicant: LG Innotek Co., Ltd., Seoul 100-714 (KR)
(72) Inventor: Nam, Hyoung Ki, 100-714 Seoul (KR)
(74) Representative: DREISS Patentanwälte PartG mbB

(57) **Abstract**

Disclosed is a mobile router. The mobile router includes a communication unit including at least two of a wireless communication unit for transceiving data through a wireless communication network, a wireless Internet unit for transceiving data through a wireless Internet network and a wire communication unit for transceiving data through a wire communication network; and a selection unit receiving data from the wireless communication unit, the wireless Internet unit or the wire communication unit to read out information about a receiving part for the data and detecting a shortest path to the receiving part to select one of the wireless communication unit, the wireless Internet unit and the wire communication unit. Thus, the mobile router may be connected through wire and wireless communication networks such that data may be transmitted through the wire and wireless communication networks, thereby supporting various services.

## Description

### BACKGROUND

The embodiment relates to a mobile router.

Generally, a mobile router is mounted on a mobile apparatus to determine a transmission path in order to transmit a received data packet through the transmission path.

Such a mobile router includes a plurality of inputs and a plurality of outputs in order to output a received data packet through an optimal output.

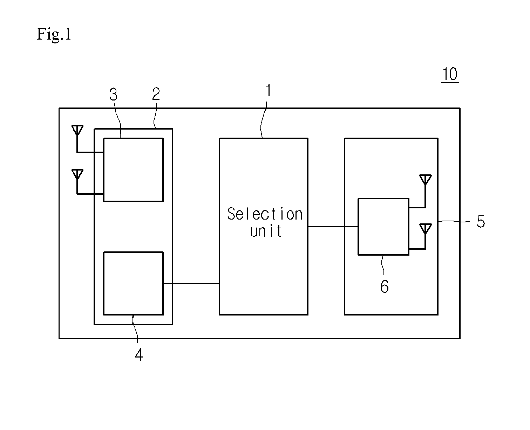

Such a mobile router may have a configuration shown in FIG. 1.

Referring to FIG. 1, the mobile router 10 includes a frequency conversion unit, a wireless communication unit 2 connected to the frequency conversion unit, and a wireless Internet unit 5.

The wireless communication unit 2 receives a data packet, which is transmitted through an LTE or 3G wireless communication network, through a plurality of antennas and modulates the received data packet.

A frequency selection unit 1 receives the modulated data packet and reads out an address of a receiving part from the data packet in order to transmit the data packet through the most suitable communication path.

The frequency selection unit 1 may receive data from the wireless communication unit 2 and transmit the data through the wireless communication unit 2. Otherwise, the frequency selection unit 1 may receive data from the wireless communication unit 2 and transmit the data through the wireless Internet unit 5.

The wireless Internet unit 5 may transceive the data packet through the plurality of antennas by using a Wi-Fi communication network serving as a high-speed wireless local area network.

The plurality of antennas may have mutually different frequency bands, such as 2.4 GHz band and 5 GHz band.

The wireless communication unit 2 may include a preprocessing unit 3 connected to the antennas and a wireless module 4.

The preprocessing unit 3 may include a frequency filter connected to the antennas and an amplifier. The wireless module 4 converts a preprocessed data packet into baseband data and demodulates the baseband data to extract data.

The wireless Internet unit 5 includes a module 6 for transceiving data through a predetermined frequency.

Since the mobile router 10 uses only a wireless network, the utilization of data traffic in a wire network is reduced and the load of the wireless network is increased.

### SUMMARY

The embodiment provides a mobile router capable of utilizing wire/wireless networks.

According to the embodiment, there is provided a mobile router including a communication unit including at least two of a wireless communication unit for transceiving data through a wireless communication network, a wireless Internet unit for transceiving data through a wireless Internet network and a wire communication unit for transceiving data through a wire communication network; and a selection unit receiving data from the wireless communication unit, the wireless Internet unit or the wire communication unit to read out information about a receiving part for the data and detecting a shortest path to the receiving part to select one of the wireless communication unit, the wireless Internet unit and the wire communication unit.

According to the embodiment, the mobile router may be connected through wire and wireless communication networks such that data may be transmitted through the wire and wireless communication networks, thereby supporting various services.

Further, the mobile router may receive a signal through the plurality of sensor networks so that the bandwidth of the transmitted data may be enlarged.

Therefore, the concentration of data transmissions on the wireless network can be distributed so that a transmission rate of wireless communication may be increased.

### BRIEF DESCRIPTION OF THE DRAWINGS

FIG. 1 is a view showing a touch window according to the related art. FIG. 1 is a block diagram showing a configuration of a mobile router according to the related art.

FIG. 2 is a view showing a mobile router according to the embodiment.

FIG. 3 is a view showing a system to which the mobile router of FIG. 2 is applied.

FIG. 4 is a block diagram showing a mobile router according to another embodiment.

### DET AILED DESCRIPTION OF THE EMBODIMENTS

Hereinafter, embodiments will be described in detail with reference to accompanying drawings so that those skilled in the art can easily work with the embodiments. However, the embodiments may not be limited to those described below, but have various modifications.

In the following description, when a predetermined part "includes" a predetermined component, the predetermined part does not exclude other components, but may further include other components unless otherwise indicated.

The embodiment provides a system which performs wire/wireless communication through a mobile router 100 by applying a plurality of communication schemes.

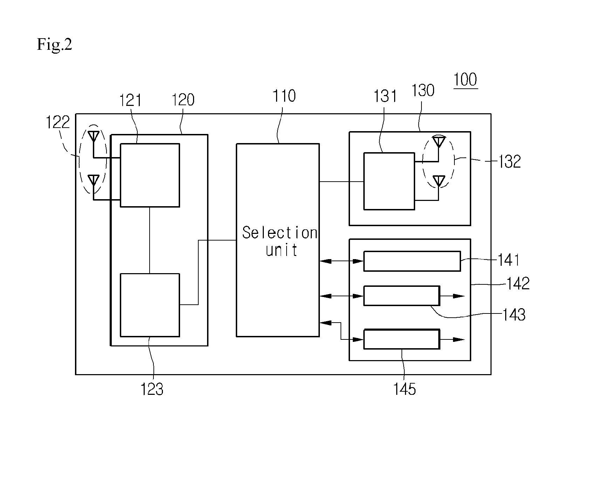

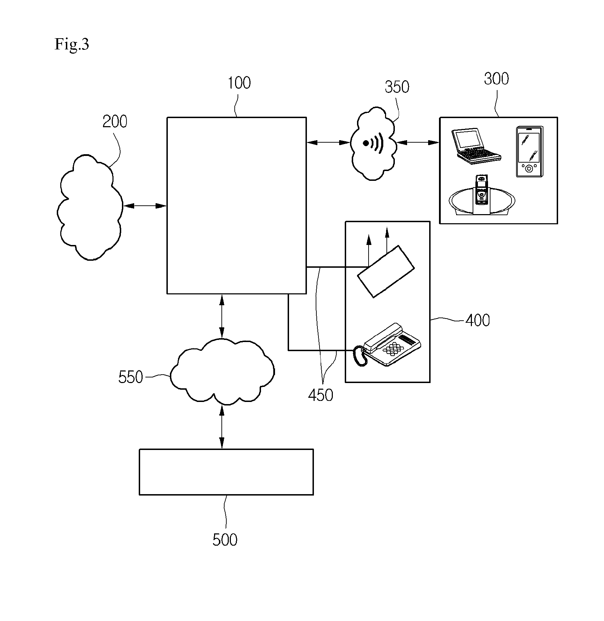

Hereinafter, a communication system according to the embodiment will be described with reference to FIGS. 2 and 3.

FIG. 2 is a view showing a mobile router 100 according to the embodiment. FIG. 3 is a view showing a system to which the mobile router 100 of FIG. 2 is applied.

Referring to FIG. 2, the mobile router 100 according to the embodiment includes a selection unit 110, a wireless communication unit 120, a wireless Internet unit 130, and a wire and sensor input unit 140.

The wireless communication unit 120 receives a data packet, which is transmitted through an LTE or 3G wireless communication network, through a plurality of antennas 122 and modulates the data packet.

The selection unit 110 receives the modulated data packet and demodulates the modulated data packet to generate baseband data. The selection unit 110 reads out an address of a receiving part from the baseband data to transmit data through the most suitable communication path.

The selection unit 110 may transmit the baseband data received from the wireless communication unit 120 through the wireless communication unit 120. To the contrary, the selection unit 110 may transmit the data received from the wireless communication unit 120 through the wireless Internet unit 130.

The selection unit 110 may transmit again the baseband data received from the wireless communication unit 120 through wireless Internet unit 130 or the wire and sensor input unit 140. In addition, the selection unit 110 may transmit the data received from the wire and sensor input unit 140 through the wireless Internet unit 130.

Further, the section unit 110 may transmit the data received from the wire and sensor input unit 140 through the wireless Internet unit 130. In addition, if necessary, the selection unit 110 may transmit the data received from the wire and sensor input unit 140 through the wireless communication unit 120 to a server.

The wireless Internet unit 130 may transceive the data through the plurality of antennas 132 by using a Wi-Fi communication network included in a high-speed wireless local area network.

The antennas 132 may have mutually different frequency bands such as 2.5 GHz and 5 GHz.

The wireless communication unit 120 may include a preprocessing unit 121 connected to the antennas 122 and a wireless module 123.

The preprocessing unit 121 may include a frequency filter connected to the antennas 122 and an amplifier. The wireless module 123 converts a preprocessed data packet into baseband data and outputs the baseband data.

Further, the wireless Internet unit 130 includes a module 131 for transceiving data through a predetermined frequency.

The wire and sensor input unit 140 includes a USB port unit 141, an Ethernet unit 143 and an analog voice communication unit 145.

The USB port unit 141 is a wire communication module which transceives with an external equipment through a USB port. The USB port unit 141 transmits data transmitted from the selection unit 110 to external equipment through a USB terminal inserted into the USB port and reads out data from the external equipment.

The Ethernet unit 143 may include a wire local area network module and may perform a connection to a LAN line through an RJ45 connector.

The analog voice communication unit 145 modulates received data into voice data and transmits the voice data through the RJ11 connector.

As described above, the wire and sensor input unit 140 includes a plurality of interfaces. The wire and sensor input unit 140 transmits data received from the selection unit 110 to an outside through a designated module and transmits data received from modules to the selection unit 110.

Referring to FIG. 3, the mobile router 100 may transceive data through an LTE or 3G/4G wireless communication network 200 and may transceive data through a wireless local area Internet network 350 such as WIFI.

Further, the mobile router 100 may transceive data through various wire communication networks 450 and may transceive data through an additional network 550.

For example, the mobile router 100 may receive data from a base station through the LTE or 3G/4G wireless communication network 200 and may transceive data with a laptop computer, a tablet PC or an Internet phone through the WIFI local area network 350.

The mobile router 100 is capable of transceiving data with a wireless router through an Ethernet unit 143 in the wire communication network 450.

The additional network 550 may be a local area network, such as an RFID communication network, NFC, Zigbee, Z-wave or Bluetooth, through which the mobile router 100 may be transceive data with a sensor or a camera module and may transceive GPS information through a GPS communication network.

Thus, the mobile router 100 receives data and reads out information about a receiving part from the data by using wire/wireless network to transmit data through a communication network suitable for the receiving part, so that the optimal data transmission/reception can be achieved.

Although it is described in the embodiment of FIG. 2 that the mobile router 100 includes the wireless communication unit 120, the wireless Internet unit 130 and the wire and sensor input unit 140, the mobile router 100 may include at least two communication modules from among the above three units.

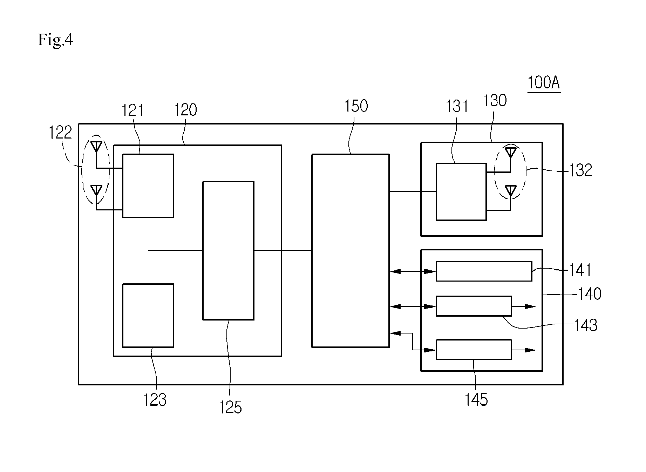

Hereinafter, a mobile router 100A according to another embodiment will be described with reference to FIG. 4.

Referring to FIG. 4, the mobile router 100A according to another embodiment includes a selection unit 150, a wireless communication unit 120, a wireless Internet unit 130, and a wire and sensor input unit 140.

The wireless communication unit 120 receives a data packet transmitted through an LTE or 3G wireless communication network through a plurality of antennas 122, and modulates and decodes the data packet to generate baseband data.

The selection unit 150 is a processor that receives the baseband data and reads out an address of a receiving part from the baseband data to transmit the data through the most suitable communication path.

The selection unit 150 may transmit the data received from the wireless communication unit 120 through the wireless communication unit 120. To the contrary, the selection unit 110 may transmit the data received from the wireless communication unit 120 through the wireless Internet unit 130.

In addition, the selection unit 150 may transmit the data received from the wireless communication unit 120 or the wireless Internet unit 130 through the wire and sensor input unit 140. To the contrary, the selection unit 150 may transmit the data received from the wire and sensor input unit 140 through the wireless communication unit 120 or the wireless Internet unit 130.

The wireless Internet unit 130 may transceive the data packet through the plurality of antennas 132 by using a Wi-Fi communication network included in a high-speed wireless local area network.

The antennas 132 may have mutually different frequency bands such as 2.5 GHz and 5 GHz.

The wireless communication unit 120 may include a preprocessing unit 121 connected to the antennas 122, a wireless module 123 and a baseband module 125.

The preprocessing unit 121 may include a frequency filter connected to the antennas 122 and an amplifier. The wireless module 123 converts a preprocessed data packet into baseband data. The baseband module 125 performs a demodulation such as QAM (Quadrature Amplitude Modulation) to extract data.

The wireless communication unit 120 may be implemented by one IC and may be connected to a USB port in the mobile router 100A.

The wireless Internet unit 130 includes a module 131 for transceiving data through a predetermined frequency. The wireless Internet unit 130 may be implemented by one IC and may be connected to the selection unit 150 through the USB port or an SDIO in the mobile router 100A.

The wire and sensor input unit 140 includes a USB port unit 141, an Ethernet unit 143 and an analog voice communication unit 145.

The USB port unit 141 is a wire communication module which transceives with an external equipment through a USB port. The USB port unit transmits data transmitted from the selection unit 150 to external equipment through a USB terminal inserted into the USB port and reads out data from the external equipment.

The Ethernet unit 143 may include a wire local area network module and may perform a connection to a LAN line through an RJ45 connector.

The analog voice communication unit 145 modulates received data into voice data and transmits the voice data through the RJ11 connector.

As described above, the wire and sensor input unit 140 includes a plurality of interfaces. The wire and sensor input unit 140 transmits data received from the selection unit 150 to an outside through a designated module and transmits data received from modules to the selection unit 150.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A mobile router comprising:
a communication unit including at least two of a wireless communication unit for transceiving data through a wireless communication network, a wireless Internet unit for transceiving data through a wireless Internet network and a wire communication unit for transceiving data through a wire communication network; and
a selection unit receiving data from the wireless communication unit, the wireless Internet unit or the wire communication unit to read out information about a receiving part for the data and detecting a shortest path to the receiving part to select one of the wireless communication unit, the wireless Internet unit and the wire communication unit.

2. The mobile router of claim 1, wherein the wireless communication unit transceives data through an LTE, 3G or 4G communication network.

3. The mobile router of claim 1, wherein the wireless Internet unit transceives data through WIFI.

4. The mobile router of claim 1, wherein the wire communication unit comprises:
a USB port unit transceiving data through a USB terminal;
an Ethernet unit using a wire Internet communication network; and
an analog voice communication unit converting data into voice data to output the voice data.

5. The mobile router of claim 1, wherein the wireless communication unit comprises:
a preprocessing unit connected to an antenna; and
a wireless module demodulating a data packet received from the preprocessing unit to generate baseband data.

6. The mobile router of claim 5, wherein the selection unit receives baseband data from the wireless module to demodulate the baseband data.

7. The mobile router of claim 5, wherein the wireless communication unit further comprises a baseband module which receives the baseband data to demodulate the baseband data.

8. The mobile router of claim 7, wherein the wireless Internet unit is connected to the selection unit through an SDIO interface.

9. The mobile router of claim 7, wherein the baseband module performs a QAM (Quadrature Amplitude Modulation) demodulation.

10. The mobile router of claim 1, wherein the mobile router transceives data to/from a plurality of sensors through a local area network.
